# FASCICULE DE BREVET EUROPEEN

(11) **EP 2 571 744 B1**
(45) Date de publication et mention de la délivrance du brevet: **03.09.2014**
(21) Numéro de dépôt: 11726876.3
(22) Date de dépôt: 17.05.2011
(51) Int. Cl.: B62D 1/187

(54) **ENSEMBLE DE DIRECTION DE VÉHICULE AUTOMOBILE**
LENKANORDNUNG FÜR EIN KRAFTFAHRZEUG
MOTOR VEHICLE STEERING ASSEMBLY

(30) Priorité: 18.05.2010 FR 1053815
(43) Date de publication de la demande: 27.03.2013
(73) Titulaire: Faurecia Intérieur Industrie, 92000 Nanterre (FR)
(72) Inventeur: BAUDIN, Stephan, F-95600 Champagne Sur Oise (FR); FABRIS, Stéphane, F-95260 Mours (FR)
(74) Mandataire: Domenego, Bertrand
(86) Numéro de dépôt international: PCT/FR2011/051100
(87) Numéro de publication internationale: WO 2011/144858

(56) Documents cités:
- DE-A1- 10 031 373
- DE-C1- 19 535 556
- FR-A1- 2 880 858
- JP-A- 2009 241 778

## Description

La présente invention concerne un ensemble de direction pour véhicule automobile, du type comprenant une colonne de direction réglable en position et une planche de bord, ladite colonne de direction étant reçue dans une ouverture de la planche de bord, un espace s'étendant entre ladite colonne de direction et ladite planche de bord, un manchon de protection flexible étant fixé autour de la colonne et comprenant une partie extrême libre s'étendant dans ledit espace, un élément de masquage de l'espace étant disposé dans ledit espace, ledit élément de masquage présentant une forme concave et comprenant une paroi supérieure fixée à la planche de bord et une paroi inférieure.

L'invention concerne également un véhicule automobile comprenant un tel ensemble de direction.

Il est connu de prévoir une colonne de direction réglable en position afin d'améliorer le confort de conduite d'un véhicule automobile en adaptant la position du volant aux préférences du conducteur. Ainsi, la colonne de direction est par exemple réglable en hauteur et en profondeur afin de positionner le volant plus ou moins haut et plus ou moins en avant dans l'habitacle. Pour permettre ce positionnement, en particulier en hauteur, l'ouverture de la planche de bord présente un diamètre plus grand que celui de la colonne afin que celle-ci puisse être déplacée dans cette ouverture. Il existe donc un espace entre la colonne et le bord de l'ouverture, ce qui laisse entrevoir au conducteur les éléments situés sous la planche de bord en arrière du volant. Cet espace n'est pas désirable, notamment pour des raisons esthétiques.

Il est également connu de disposer un manchon de protection autour de l'arbre de la colonne de direction sous le volant afin de ne pas laisser cet arbre à nu dans la partie qui s'étend dans l'habitacle du véhicule et de combler l'espace entre le volant et l'ouverture de la planche de bord dans toutes les positions de la colonne de direction. Le manchon de protection a par exemple la forme d'un soufflet en matériau élastomère. Il présente une partie extrême libre disposée dans l'ouverture et agencée pour masquer l'espace s'étendant entre la colonne et le bord de l'ouverture afin de cacher les éléments situés sous la planche de bord et améliorer l'aspect de la planche de bord. Cependant un tel soufflet présente un encombrement important car il doit être adapter pour masque l'espace dans toutes les positions de la colonne, notamment la position d'extrémité basse de la colonne dans laquelle la plus grande visibilité des éléments en arrière du volant est offerte au conducteur. Cependant, cet encombrement entraîne une interférence entre le soufflet et les éléments environnants, notamment lorsque la colonne se trouve dans sa position d'extrémité haute, ce qui peut entraîner des déformations dans la planche de bord, affectant l'aspect de celle-ci, et des difficultés de montage.

Il est également connu de prévoir une membrane élastique, fixée d'une part à la colonne et d'autre part à la planche de bord. Cette membrane se déplace et se déforme avec le déplacement de la colonne afin de combler l'espace entre celle-ci et la planche de bord dans toutes les positions de la colonne. Cependant, une telle membrane entraîne des difficultés de montage, car il faut assembler la membrane à la fois à la colonne et à la planche de bord, ce qui réduit les cadences de montage. En outre, cette membrane est sollicitée lors du mouvement de la colonne de direction, ce qui entraîne une usure prématurée de celle-ci. Enfin, en cas de choc, elle peut être arrachée, ce qui impose son remplacement lors de la réparation du véhicule.

Le document DE 100 31 373 A1 décrit un ensemble de direction selon le préambule de la revendication 1.

L'un des buts de l'invention est de pallier ces inconvénients en proposant un ensemble de direction permettant de masquer efficacement l'espace entre la colonne de direction et la planche de bord tout en étant particulièrement simple à monter et offrant une grande longévité.

A cet effet, l'invention concerne un ensemble de direction du type précité, dans lequel ledit élément de masquage est réalisé en un matériau rigide et est immobile par rapport à la planche de bord, la paroi inférieure étant agencée pour recevoir de manière libre ladite partie extrême libre dudit manchon de protection.

L'élément de masquage étant rigide et fixé uniquement à la planche de bord, il est particulièrement simple à monter dans le véhicule. En outre, le manchon de protection n'a pas besoin de présenter une épaisseur trop importante puisque l'élément de masquage permet de combler l'espace entre la colonne et la planche de bord, notamment en position d'extrémité basse de la colonne. Ainsi, le manchon de protection n'interfère pas avec son environnement. En outre, comme celui-ci présente une extrémité libre non fixée, le manchon n'est pas sollicité en déformation lors du déplacement de la colonne et n'est pas arraché en cas de choc, ce qui prolonge sa longévité.

Selon d'autres caractéristiques de l'ensemble de direction :
- la paroi supérieure et la paroi inférieure de l'élément de masquage sont jointes par une paroi de fond, formant le fond de la concavité de l'élément de masquage ;
- la paroi de fond s'étend en travers de sensiblement tout l'espace s'étendant entre la colonne de direction et la planche de bord, de sorte à masquer les éléments s'étendant en avant dudit espace ;
- la paroi de fond comprend une ouverture de passage d'un élément fonctionnel de la planche de bord ;
- la paroi de fond comprend une patte de fixation à un élément fonctionnel s'étendant sous la planche de bord ;
- la paroi supérieure de l'élément de masquage comprend au moins une patte de fixation à la planche de bord, ladite patte étant engagée dans un orifice de réception correspondant de la planche de bord ;
- la paroi inférieure de l'élément de masquage est agencée pour entourer au moins la partie supérieure de la colonne de direction et du manchon de protection ;
- la paroi inférieure de l'élément de masquage comprend deux pattes d'appui contre des rails de fixation de la colonne de direction, lesdits rails étant fixés sur une traverse, ladite traverse s'étendant sous l'espace entre ladite colonne de direction et la planche de bord ;
- le manchon de protection de la colonne de direction est formé par un soufflet au moins en matériau élastomère ; et
- le manchon de protection comprend un corps, à partir duquel s'étend la partie extrême libre, le corps étant réalisé en un matériau plastique rigide et la partie extrême libre étant réalisée en un matériau élastomère souple

L'invention concerne également un véhicule automobile comprenant un ensemble de direction comprenant une colonne de direction réglable en position, reçue dans une ouverture d'une planche de bord, dans lequel l'ensemble de direction est tel que décrit ci-dessus.

D'autres aspects et avantages de l'invention apparaîtront à la lecture de la description qui suit, donnée à titre d'exemple et faite en référence aux dessins annexés, dans lesquels :
- la Fig. 1 est une représentation schématique en coupe selon un plan longitudinal d'une partie d'un ensemble de direction selon l'invention,
- la Fig. 2 est une représentation schématique en perspective de l'élément de masquage de l'ensemble de direction de la Fig. 1,
- la Fig. 3 est une représentation schématique de face et en perspective d'une partie de l'ensemble de direction de la Fig. 1.

Dans la description, le terme longitudinal est défini selon la direction avant-arrirère d'un véhicule automobile et le terme transversal est défini selon la largeur du véhicule automobile.

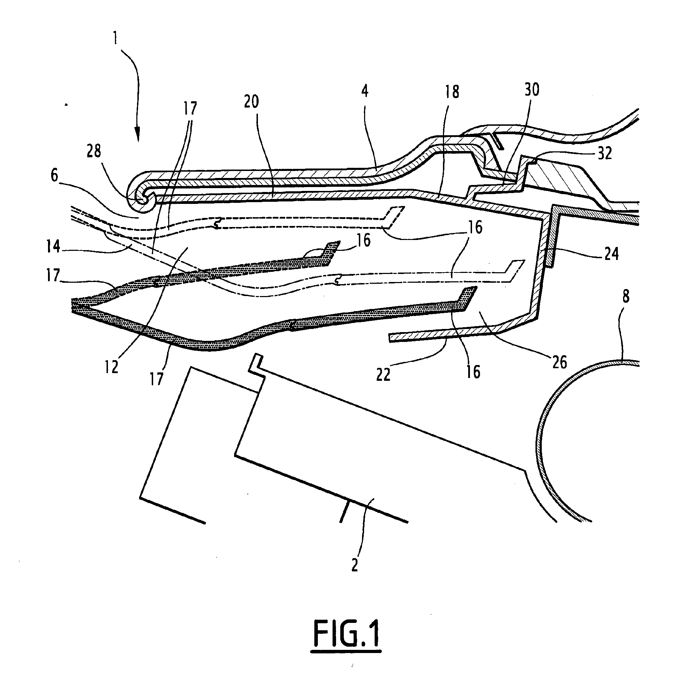

En référence à la Fig. 1, on décrit un ensemble de direction 1 comprenant une colonne de direction 2 (représentée partiellement) et une planche de bord 4 (également représentée partiellement). La colonne de direction 2 est montée dans une ouverture 6 de la planche de bord 4 de sorte que sa partie extrême s'étende dans l'habitacle du véhicule automobile et que le volant, montée sur ladite partie extrême, soit accessible au conducteur du véhicule.

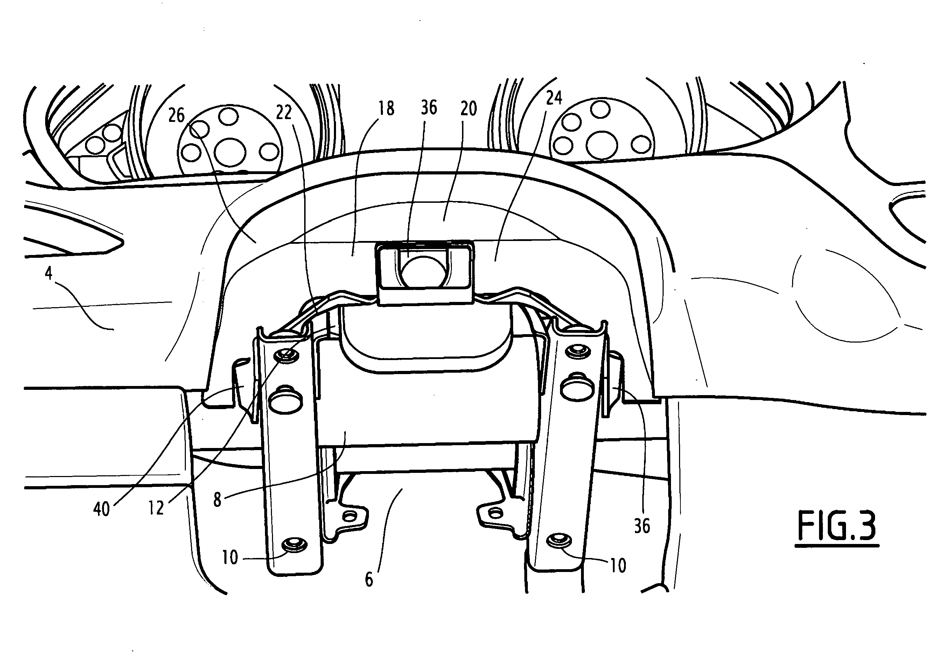

De façon connue, la colonne de direction 2 est montée sur une traverse 8 s'étendant sensiblement transversalement et servant également de support à la planche de bord 4. La colonne 2 est par exemple montée sur des rails 10 (Fig. 3) fixés à la traverse 8 et portant des moyens de fixation de la colonne 2. La colonne 2 est montée de sorte à être mobile en rotation autour de la traverse 8 entre une position extrême basse et une position extrême haute permettant de régler la position en hauteur du volant dans l'habitacle du véhicule. La colonne 2 est également réglable en profondeur, par exemple en étant télescopique, de façon à régler la position plus ou moins en avant du volant dans l'habitacle. L'ouverture 6 dans la planche de bord 4 est adaptée pour permettre ces déplacements de la colonne 2, c'est-à-dire qu'elle présente une dimension suffisante pour permettre le positionnement de la colonne 2 dans ses positions extrêmes basse et haute. Il existe donc un espace 12 entre la colonne 2 et la planche de bord 4 qui laisse voir les éléments disposés sous la planche de bord 4 en arrière du volant, la traverse 8 s'étendant sous cet espace 12. Ces éléments sont plus particulièrement visibles lorsque la colonne 2 est dans sa position d'extrémité basse, l'espace s'étendant alors sensiblement de la planche de bord 4 jusqu'à la traverse 8 et le conducteur ayant une vue plongeante sur cet espace.

Un manchon de protection 14, uniquement représenté sur la Fig. 1, est fixé autour de la partie extrême de la colonne 2 s'étendant dans l'habitacle au-delà de l'ouverture 6. Ce manchon 14 est par exemple un soufflet au moins en matériau élastomère adapté pour s'écraser en cas de choc frontal contre le véhicule occasionnant un déplacement de la colonne 2 par rapport à la caisse du véhicule. Le manchon 14 comprend une partie extrême libre 16 s'étendant autour de la colonne 2 dans l'espace 12, comme représenté sur la Fig. 1. Sur la Fig. 1, la partie extrême libre 16 du manchon 14 a été représentée dans quatre positions différentes, à savoir deux positions extrêmes basses, l'une dans laquelle la colonne 2 est reculée (forme pleine, contour plein) et l'autre dans laquelle la colonne est avancée (forme pleine, traits pointillés) dans l'habitacle, et deux positions extrêmes hautes, l'une dans laquelle la colonne 2 est reculée (forme vide, traits mixtes) et l'autre dans laquelle la colonne 2 est avancée (forme vide, traits pointillés) dans l'habitacle. Comme on peut le voir sur la figure, l'épaisseur du manchon 14 est assez faible de sorte que celui-ci n'entre pas en interférence avec son environnement et notamment avec la planche de bord dans sa position extrême haute. Le manchon 14 n'est pas fixé à la planche de bord 4, ce qui simplifie le montage de la colonne de direction 2.

Selon un mode de réalisation, la partie extrême libre 16 du manchon 14 est réalisée en un matériau élastomère souple, par exemple du type EPDM (éthylène-propylène-diène monomère) ou SEBS (Poly(styrene-ethene-co-butane-styrene)), et le corps 17 du manchon 14, à partir duquel s'étend la partie extrême libre 16, est réalisée en un matériau plastique injectable rigide, par exemple du type PP (polypropylène). Un tel manchon est par exemple réalisé par bi-injection, qui permet d'obtenir un manchon en deux matériaux différents en une seule opération.

Afin de masquer les éléments s'étendant derrière l'espace 12, notamment dans la position extrême basse de la colonne 2, l'ensemble de direction 1 comprend en outre un élément de masquage 18 disposé entre la planche de bord 4 et la colonne de direction 2.

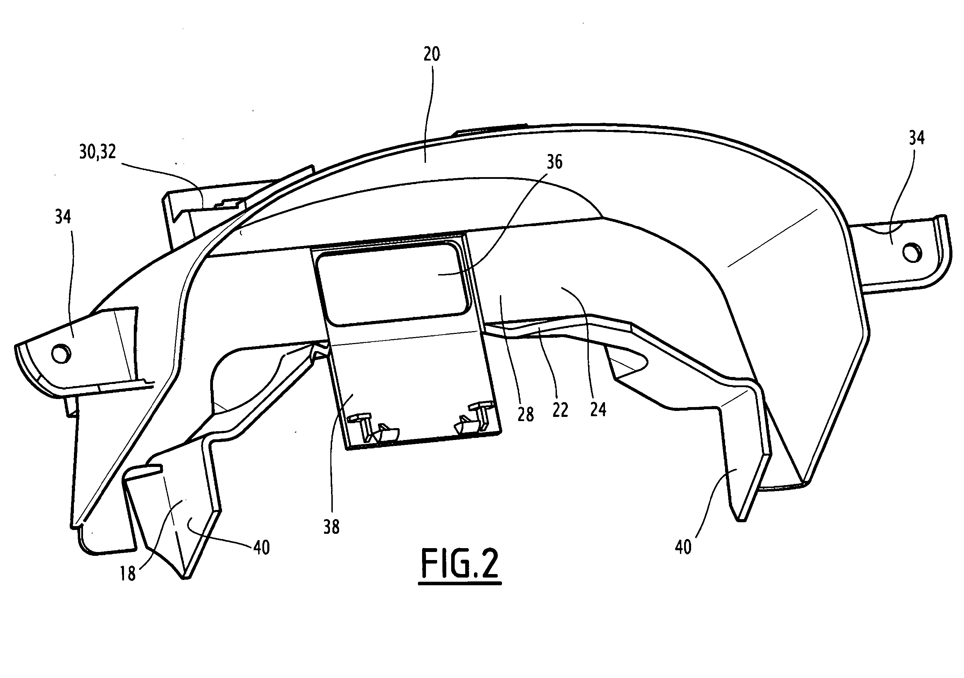

L'élément de masquage 18, représenté en perspective sur la Fig. 2, est formé d'une seule pièce, par exemple en matière plastique, rigide. Il est formé d'une paroi supérieure 20 et d'une paroi inférieure 22, s'étendant sensiblement longitudinalement et jointes l'une à l'autre par une paroi de fond 24 s'étendant sensiblement transversalement, de sorte que l'élément de masquage 18 présente une forme concave, le fond de la concavité étant formé par la paroi de fond 24. La concavité 26 de l'élément de masquage 18 est tournée vers l'arrière du véhicule, c'est-à-dire vers la partie extrême portant le volant de la colonne de direction 2. Comme représenté sur la Fig. 1, la concavité 26 reçoit la partie extrême libre 16 du manchon 14 de façon libre dans toutes les positions de la colonne de direction 2. Par réception de façon libre, on entend que la partie extrême libre 16 du manchon 14 n'est pas fixée à l'élément de masquage mais est simplement disposée dans la concavité 26.

La paroi supérieure 20 s'étend sous la planche de bord 4 sensiblement parallèlement à celle-ci jusqu'au bord de l'ouverture 6. La paroi supérieure 20 est appliquée contre la face inférieure de la planche de bord et s'étend longitudinalement depuis le fond de l'espace 12 jusqu'à un décrochement 28 de la planche de bord, le décrochement 28 s'étendant au niveau de l'ouverture 6. Le décrochement 28 s'étend sensiblement perpendiculairement par rapport à la face supérieure de la planche de bord 4 et vers l'ouverture 6. Le décrochement 28 permet de masquer le bord de la paroi supérieure 20 de sorte que ce bord est invisible depuis l'extérieur de la planche de bord 4. La paroi supérieure 20 comprend des moyens de fixation 30 à la planche de bord 4. Ces moyens de fixation 30 sont par exemple formés par au moins une patte de fixation 32 emboîtée dans une ouverture correspondante de la planche de bord 4. La patte de fixation 32 s'étend de la paroi supérieure 20 à l'opposé de la cavité 26 et présente une certaine élasticité pour permettre son emboîtement et sa fixation à la planche de bord 4. De préférence, la paroi supérieure 20 comprend deux pattes de fixation 32, de sorte à assurer une fixation efficace de l'élément de masquage 18 à la planche de bord 4. La paroi supérieure 20 peut également comprendre des pattes de fixation 34 s'étendant sensiblement transversalement pour fixer l'élément de masquage 18 à d'autres éléments fonctionnels s'étendant sous la planche de bord 4, comme représenté sur la Fig. 2.

La paroi de fond 24 s'étend sensiblement perpendiculairement à la paroi supérieure 20, c'est-à-dire sensiblement verticalement lorsque l'élément de masquage 18 est monté et sensiblement parallèlement à l'ouverture 6. La paroi de fond 24 s'étend au fond de l'espace 12, c'est-à-dire en arrière des éléments fonctionnels s'étendant sous la planche de bord 4 de sorte à masquer ceux-ci pour qu'ils soient invisibles depuis l'ouverture 6. A cet effet, la paroi de fond 24 s'étend en travers de sensiblement tout l'espace 12 s'étendant entre la colonne de direction 2 et la planche de bord 4 aussi bien verticalement que transversalement, comme représenté sur les Fig. 1 et 3. Selon un mode de réalisation particulier, la paroi de fond 24 comprend une ouverture 36 de passage d'un élément fonctionnel s'étendant sous la planche de bord. Cette ouverture 36 permet par exemple le passage de câblages pour le branchement d'instruments de la planche de bord 4 ou situés sous le volant. Selon un mode de réalisation représenté par exemple sur la Fig. 2, la paroi de fond 24 comprend également une patte de fixation 38 à un élément fonctionnel s'étendant sous la planche de bord 4.

La paroi inférieure 22 s'étend longitudinalement sensiblement perpendiculairement à la paroi de fond 24, dans l'espace 12 entre la colonne 2 et la planche de bord 4. Elle présente une longueur inférieure à la longueur de la paroi supérieure 20 afin de laisser un passage pour la colonne de direction 2. A cet effet, la paroi inférieure 22 présente une forme courbe de sorte à entourer au moins la partie supérieure de la colonne de direction 2 et du manchon de protection 14, comme représenté sur les Fig 2 et 3. La paroi inférieure 22 comprend en outre deux pattes 40 d'appui contre les rails de fixation 10 de la colonne de direction 2, comme représenté sur la Fig. 3. On assure ainsi que l'élément de masquage 18 ferme bien tout l'espace 12 afin de cacher les éléments s'étendant en avant de cet espace par la paroi de fond 24.

Selon le mode de réalisation, dans lequel le soufflet 14 est réalisé en deux matériaux différents, le montage du soufflet 14 est facilité. En effet, la partie extrême libre 16 peut être disposée dans la concavité 26 par déformation élastique de la partie extrême libre 16, tandis que le corps 17 conserve une rigidité nécessaire pour l'assemblage du corps 17 avec d'autres pièces environnantes du véhicule (non représentées). Ce mode de réalisation permet ainsi de simplifier le montage du manchon 14 dans l'élément de masquage 18 et son assemblage avec des pièces environnantes, tout en conservant un comportement adapté pour s'écraser en cas de choc.

L'ensemble de direction 1 décrit ci-dessus permet de masquer efficacement l'espace 12 entre la colonne de direction 2 et la planche de bord 4, en particulier lorsque la colonne de direction 2 est dans sa position extrême basse. Dans cette position, le conducteur voit la paroi de fond 24 de l'élément de masquage et non les éléments fonctionnels s'étendant en avant de cette paroi. L'ensemble de direction 1 présente donc un aspect esthétique satisfaisant. L'élément de masquage 18 ainsi que la colonne de direction 2 sont particulièrement simples à monter, car le monteur n'a qu'à fixer l'élément de masquage 18 à la planche de bord 4 et disposer la partie extrême libre 16 du manchon 14 dans la concavité 26 de l'élément de masquage 18 sans fixer celle-ci. En outre, l'épaisseur du manchon 14 peut-être réduite de sorte à éviter toute interférence avec son environnement dans les différentes positions de la colonne de direction 2. L'ensemble de direction 1 se comporte particulièrement bien en cas de choc, car il n'y a pas de fixation entre le manchon 14 et la planche de bord 4. Enfin, le manchon 14 peut présenter une durée de vie importante car il n'est pas soumis à des déformations lors des déplacements de la colonne de direction 2.

## Revendications

1. Ensemble de direction (1) pour véhicule automobile comprenant une colonne de direction (2) réglable en position et une planche de bord (4), ladite colonne de direction (2) étant reçue dans une ouverture (6) de la planche de bord (4), un espace (12) s'étendant entre ladite colonne de direction (2) et ladite planche de bord (4), un manchon de protection (14) flexible étant fixé autour de la colonne (2) et comprenant une partie extrême (16) libre s'étendant dans ledit espace (12), un élément de masquage (18) de l'espace (12) étant disposé dans ledit espace (12), ledit élément de masquage (18) présentant une forme concave et comprenant une paroi supérieure (20) fixée à la planche de bord (4) et une paroi inférieure (22), **caractérisé en ce que** ledit élément de masquage (18) est réalisé en un matériau rigide et est immobile par rapport à la planche de bord (4), la paroi inférieure (22) étant agencée pour recevoir de manière libre ladite partie extrême (16) libre dudit manchon de protection (14).

2. Ensemble de direction selon la revendication 1, **caractérisé en ce que** la paroi supérieure (20) et la paroi inférieure (22) de l'élément de masquage (18) sont jointes par une paroi de fond (24), formant le fond de la concavité (26) de l'élément de masquage (18).

3. Ensemble de direction selon la revendication 2, **caractérisé en ce que** la paroi de fond (24) s'étend en travers de sensiblement tout l'espace (12) s'étendant entre la colonne de direction (2) et la planche de bord (4), de sorte à masquer les éléments s'étendant en avant dudit espace (12).

4. Ensemble de direction selon la revendication 2 ou 3, **caractérisé en ce que** la paroi de fond (24) comprend une ouverture (36) de passage d'un élément fonctionnel de la planche de bord (4).

5. Ensemble de direction selon la revendication 4, **caractérisé en ce que** la paroi de fond (24) comprend une patte de fixation (38) à un élément fonctionnel s'étendant sous la planche de bord (4).

6. Ensemble de direction selon l'une quelconque des revendications 1 à 5, **caractérisé en ce que** la paroi supérieure (20) de l'élément de masquage (18) comprend au moins une patte de fixation (32) à la planche de bord (4), ladite patte (32) étant engagée dans un orifice de réception correspondant de la planche de bord (4).

7. Ensemble de direction selon l'une quelconque des revendications 1 à 6, **caractérisé en ce que** la paroi inférieure (22) de l'élément de masquage (18) est agencée pour entourer au moins la partie supérieure de la colonne de direction (2) et du manchon de protection (14).

8. Ensemble de direction selon l'une quelconque des revendications 1 à 7, **caractérisé en ce que** la paroi inférieure (22) de l'élément de masquage (18) comprend deux pattes d'appui (40) contre des rails de fixation (10) de la colonne de direction (2), lesdits rails (10) étant fixés sur une traverse (8), ladite traverse (8) s'étendant sous l'espace (12) entre ladite colonne de direction (2) et la planche de bord (4).

9. Ensemble de direction selon l'une quelconque des revendications 1 à 8, **caractérisé en ce que** le manchon de protection (14) de la colonne de direction (2) est formé par un soufflet au moins en matériau élastomère.

10. Ensemble de direction selon la revendication 9, **caractérisé en ce que** le manchon de protection (14) comprend un corps (17), à partir duquel s'étend la partie extrême libre (16), le corps (17) étant réalisé en un matériau plastique rigide et la partie extrême libre (16) étant réalisée en un matériau élastomère souple.

11. Véhicule automobile, comprenant un ensemble de direction comprenant une colonne de direction (2) réglable en position, reçue dans une ouverture (6) d'une planche de bord (4), **caractérisé en ce que** ledit ensemble de direction (1) est selon l'une quelconque des revendications 1 à 10.

## Patentansprüche

1. Lenkungseinheit (1) für ein Kraftfahrzeug, eine positionsverstellbare Lenksäule (2) und ein Armaturenbrett (4) aufweisend, wobei die Lenksäule (2) in einer Öffnung (6) des Armaturenbretts (4) aufgenommen ist, wobei sich ein Raum (12) zwischen der Lenksäule (2) und dem Armaturenbrett (4) erstreckt, wobei eine flexible Schutzmuffe (14) um die Lenksäule (2) befestigt ist und einen freien äußersten Abschnitt (16) aufweist, der sich in den Raum (12) erstreckt, wobei ein Abdeckungselement (18) für den Raum (12) in dem Raum (12) angeordnet ist, wobei das Abdeckungselement (18) eine konkave Form aufweist und eine am Armaturenbrett (4) befestigte obere Wand (20) und eine untere Wand (22) aufweist, **dadurch gekennzeichnet, dass** das Abdeckungselement (18) aus einem starren Material hergestellt und in Bezug auf das Armaturenbrett (4) unbeweglichen ist, wobei die untere Wand (22) dazu eingerichtet ist, den freien äußersten Abschnitt der Schutzmuffe (14) frei aufzunehmen.

2. Lenkungseinheit nach Anspruch 1, **dadurch gekennzeichnet, dass** die obere Wand (20) und die untere Wand (22) des Abdeckungselements (18) durch eine Rückwand (24) verbunden sind, die den Hintergrund der Konkavität (26) des Abdeckungselements (18) bildet.

3. Lenkungseinheit nach Anspruch 2, **dadurch gekennzeichnet, dass** sich die Rückwand (24) quer zum im Wesentlichen ganzen, sich zwischen der Lenksäule (2) und dem Armaturenbrett (4) erstreckenden Raum (12) erstreckt, um die sich vor dem Raum (12) erstreckenden Elemente abzudecken.

4. Lenkungseinheit nach Anspruch 2 oder 3, **dadurch gekennzeichnet, dass** die Rückwand (24) eine Durchtrittsöffnung (36) für ein Funktionselement des Armaturenbretts (4) aufweist.

5. Lenkungseinheit nach Anspruch 4, **dadurch gekennzeichnet, dass** die Rückwand (24) eine Befestigungslasche (38) zur Befestigung an einem sich unter dem Armaturenbrett (4) erstreckenden Funktionselement aufweist.

6. Lenkungseinheit nach einem der Ansprüche 1 bis 5, **dadurch gekennzeichnet, dass** die obere Wand (20) des Abdeckungselements (18) mindestens eine Befestigungslasche (32) zur Befestigung am Armaturenbrett (4) aufweist, wobei die Lasche (32) in einer entsprechenden Aufnahmeöffnung des Armaturenbretts (4) in Eingriff ist.

7. Lenkungseinheit nach einem der Ansprüche 1 bis 6, **dadurch gekennzeichnet, dass** die untere Wand (22) des Abdeckungselements (18) dazu eingerichtet ist, zumindest den oberen Abschnitt der Lenksäule (2) und der Schutzmuffe (14) zu umgeben.

8. Lenkungseinheit nach einem der Ansprüche 1 bis 7, **dadurch gekennzeichnet, dass** die untere Wand (22) des Abdeckungselements (18) zwei Abstützlaschen (40) zur Abstützung an Befestigungsschienen der Lenksäule (2) aufweist, wobei die Schienen (10) auf einem Querträger (8) befestigt sind, wobei sich der Querträger (8) unter dem Raum (12) zwischen der Lenksäule (2) und dem Armaturenbrett (4) erstreckt.

9. Lenkungseinheit nach einem der Ansprüche 1 bis 8, **dadurch gekennzeichnet, dass** die Schutzmuffe (14) der Lenksäule (2) durch einen Balg aus zumindest einem Elastomermaterial gebildet ist.

10. Lenkungseinheit nach Anspruch 9, **dadurch gekennzeichnet, dass** die Schutzmuffe (14) einen Körper (17) aufweist, aus dem sich der freie äußerste Abschnitt (16) erstreckt, wobei der Körper (17) aus einem starren Kunststoff hergestellt ist, und wobei der freie äußerste Abschnitt (16) aus einem nachgiebigen Elastomermaterial hergestellt ist.

11. Kraftfahrzeug, eine Lenkungseinheit umfassend, die eine positionsverstellbare Lenksäule (2) aufweist, die in einer Öffnung (6) eines Armaturenbretts (4) aufgenommen ist, **dadurch gekennzeichnet, dass** die Lenkungseinheit (1) nach einem der Ansprüche 1 bis 10 ausgebildet ist.

## Claims

1. A steering assembly (1) for a motor vehicle, comprising a position-adjustable steering column (2) and a dashboard (4), said steering column (2) being received in an opening (6) in the dashboard (4), a space (12) extending between the steering column (2) and the dashboard (4), a flexible protective sleeve (14) being secured around the column (2) and comprising a free end part (16) that extends inside said space (12), a concealing element (18) of the space (12) being disposed in said space (12), said concealing element (18) having a concave form and comprising an upper wall (20) secured to the dashboard (4) and a lower wall (22), **characterized in that** said concealing element (18) is made from a rigid material and is unable to move in relation to the dashboard (4), the lower wall (22) being arranged to receive the free end part (16) of the protective sleeve (14) freely.

2. The steering assembly according to claim 1, **characterized in that** the upper wall (20) and the lower wall (22) of the concealing element (18) are attached by a bottom wall (24), forming the bottom of the concavity (26) of the concealing element (18).

3. The steering assembly according to claim 2, **characterized in that** the bottom wall (24) extends through substantially the entire space (12) extending between the steering column (2) and the dashboard (4), so as to conceal the elements extending in front of said space (12).

4. The steering assembly according to claim 2 or 3, **characterized in that** the bottom wall (24) comprises a passage opening (36) for a functional element of the dashboard (4).

5. The steering assembly according to claim 4, **characterized in that** the bottom wall (24) comprises a fastening tab (38) for fastening to a functional element extending under the dashboard (4).

6. The steering assembly according to any one of claims 1 to 5, **characterized in that** the upper wall (20) of the concealing element (18) comprises at least one fastening tab (32) for fastening to the dashboard (4), said tab (32) being engaged in a corresponding receiving orifice of the dashboard (4).

7. The steering assembly according to any one of claims 1 to 6, **characterized in that** the lower wall (22) of the concealing element (18) is arranged to surround at least the upper part of the steering column (2) and the protective sleeve (14).

8. The steering assembly according to any one of claims 1 to 7, **characterized in that** the lower wall (22) of the concealing element (18) comprises two bearing tabs (40) for bearing against fastening rails (10) of the steering column (2), said rails (10) being fastened on a crossbeam (8), said crossbeam (8) extending under the space (12) between said steering column (2) and the dashboard (4).

9. The steering column according to any one of claims 1 to 8, **characterized in that** the protective sleeve (14) of the steering column (2) is formed by a bellows at least made from an elastomer material.

10. The steering assembly according to claim 9, **characterized in that** the protective sleeve (14) comprises a body (17) from which the free end portion (16) extends, the body (17) being made from a rigid plastic material and the free end portion (16) being made from a flexible elastomer material.

11. A motor vehicle comprising a steering assembly comprising a position-adjustable steering column (2), received in an opening (6) of a dashboard (4), in which the steering assembly (1) is according to any one of claims 1 to 10.
